# FASCICULE DE BREVET EUROPEEN

(11) **EP 2 659 722 B1**
(45) Date de publication et mention de la délivrance du brevet: **17.04.2019**
(21) Numéro de dépôt: 11815530.8
(22) Date de dépôt: 22.12.2011
(51) Int. Cl.: H04W 4/02, H04W 64/00

(54) **PROCÉDÉ ET SERVEUR DE MEDIATION POUR UN SERVICE DE GEOLOCALISATION DANS UN RESEAU**
VERMITTLUNGSSERVER UND -VERFAHREN FÜR EINEN GEOPOSITIONIERUNGSDIENST IN EINEM NETZWERK
MEDIATION METHOD AND SERVER FOR A GEOPOSITIONING SERVICE IN A NETWORK

(30) Priorité: 30.12.2010 FR 1061382
(43) Date de publication de la demande: 06.11.2013
(73) Titulaire: Orange, 75015 Paris (FR)
(72) Inventeur: POPPLETON, Marc, F-22140 Tonquedec (FR); FOUCAULT, Béatrice, F-22730 Tregastel (FR)
(74) Mandataire: Delumeau, François Guy
(86) Numéro de dépôt international: PCT/FR2011/053162
(87) Numéro de publication internationale: WO 2012/089970

(56) Documents cités:
- EP-A1- 2 200 357
- WO-A1-00/38467
- WO-A1-01/39528
- WO-A1-98/52379
- WO-A2-03/056853

## Description

### Arrière plan de l'invention

L'invention se situe dans le domaine de la géolocalisation des terminaux mobiles.

De nos jours, les services de géolocalisation se développent rapidement. D'une façon générale, ces services permettent de fournir des informations en fonction de la position géographique de l'utilisateur, proposant ainsi des services personnalisés à haute valeur ajoutée.

De nombreux services mobiles permettent d'obtenir la localisation d'un terminal appelant ou d'un terminal appelé. Les utilisateurs de ces services peuvent à tout moment décider s'ils souhaitent être visibles ou non et doivent donner leur accord à chaque demande de localisation.

D'autres services connus permettent aux utilisateurs de déclarer ou de modifier eux-mêmes leurs positions.

Au titre d'un premier exemple représentatif de l'état actuel de la technique, on connait une solution de géolocalisation sur téléphone mobile, dans laquelle un premier terminal abonné à un service de localisation peut demander à un deuxième terminal abonné à ce service de lui communiquer sa position.

Cette solution présente un inconvénient majeur en ce qu'elle requiert d'une part un abonnement à ce service, de la part des deux terminaux, et d'autre part des moyens de géolocalisation incorporés dans le terminal mobile communiquant sa position.

Une autre solution de l'état actuel de la technique permet à un terminal quelconque d'obtenir par SMS la localisation d'un terminal muni de moyens de géolocalisation. Malheureusement, ces solutions ne sont pas fiables, la localisation communiquée pouvant être erronée.

Le document WO 03/056853 décrit un serveur de localisation apte, en réponse à une demande reçue d'une station mobile, à obtenir des informations de localisation sur la cellule occupée par cette station et à envoyer ces informations par SMS à la station mobile.

L'invention vise à pallier aux inconvénients des solutions actuelles en proposant un mécanisme de localisation permettant à des terminaux quelconques de se communiquer des informations de localisation fiables.

### Objet et résumé de l'invention

Plus précisément, l'invention concerne un procédé de médiation mis en oeuvre par un serveur dans un réseau de communication et conforme à l'objet de la revendication 1.

Corrélativement, l'invention concerne un serveur de médiation conforme à l'objet de la revendication 12.

Dans un mode de réalisation, l'invention propose un serveur de médiation dans un réseau de télécommunications, apte à obtenir la localisation d'un terminal, à la valider, et à demander l'autorisation explicite de l'utilisateur de ce terminal avant de la communiquer à un autre terminal.

Le serveur de médiation selon l'invention peut obtenir l'autorisation de l'utilisateur du deuxième terminal par tout moyen, et notamment par l'envoi d'un message direct, par SMS ou en utilisant le protocole WAP.

Ainsi, dans un mode particulier de réalisation du procédé de médiation selon l'invention, l'étape d'obtention de l'autorisation comporte une étape d'envoi d'une requête à une passerelle SMS pour qu'elle envoie un message SMS au deuxième terminal, ce message demandant à l'utilisateur du deuxième terminal s'il souhaite communiquer sa localisation réelle au premier terminal.

Dans un mode particulier de réalisation du procédé de médiation selon l'invention, l'étape d'obtention de l'autorisation comporte :
- une étape d'interrogation d'un serveur de capacités pour déterminer si le deuxième terminal est apte à mettre en oeuvre le protocole WAP ; et si c'est le cas
- une étape d'envoi d'une requête à une passerelle SMS pour qu'elle envoie un message SMS enrichi au deuxième terminal, ce message demandant à l'utilisateur du deuxième terminal s'il souhaite communiquer sa localisation réelle au premier terminal, le message SMS enrichi comportant un lien vers un fichier comportant la localisation réelle du deuxième terminal.

Dans un mode préféré de réalisation, le serveur de médiation selon l'invention est apte à communiquer une localisation du deuxième terminal obtenue par des moyens de localisation propres au deuxième terminal, et à obtenir lui-même la localisation du deuxième terminal auprès d'un serveur de localisation de confiance lorsque le deuxième terminal ne possède pas de moyens propres de localisation.

Conformément à l'invention, le procédé de médiation selon l'invention comporte une étape au cours de laquelle le serveur de médiation vérifie si le deuxième terminal comporte des moyens propres de géolocalisation. Cette vérification peut notamment être effectuée en interrogeant le deuxième terminal ou en consultant une base de données.

Dans un mode particulier de réalisation, le procédé de médiation selon l'invention comporte, lorsque le deuxième terminal comporte des moyens propres de géolocalisation, une étape d'envoi d'un message au deuxième terminal pour obtenir un message de réponse comportant une localisation du deuxième terminal obtenue localement par le deuxième terminal.

Ce message de réponse peut comporter des informations complémentaires, par exemple des données textuelles saisies par l'utilisateur du deuxième terminal pour préciser sa localisation.

Le procédé de médiation selon l'invention comporte une étape d'obtention de la localisation réelle du deuxième terminal auprès d'un serveur de localisation de confiance.

Dans un mode préféré de réalisation, le serveur de médiation selon l'invention se comporte comme un tiers de confiance, en ce qu'il valide la localisation du deuxième terminal obtenue localement par le deuxième terminal lui-même avant de la communiquer au premier terminal.

Le procédé de médiation selon l'invention comporte une étape de vérification de la localisation obtenue localement en la comparant avec la localisation réelle obtenue auprès du serveur de localisation de confiance.

Dans un mode préféré de réalisation du procédé de médiation selon l'invention, l'étape de communication de la localisation obtenue localement par le deuxième terminal est effectuée uniquement si la localisation obtenue localement est vérifiée valide par comparaison avec la localisation réelle.

Le serveur de médiation selon l'invention peut communiquer la localisation du deuxième terminal au premier terminal par tout moyen, et notamment directement, par SMS ou en utilisant le protocole WAP.

Conformément à l'invention, l'étape de communication comporte l'envoi d'un message au premier terminal, ce message comportant la localisation obtenue localement par le deuxième terminal ou la localisation réelle du deuxième terminal.

Le serveur de médiation selon l'invention peut être sollicité par le premier terminal par tout moyen, et notamment par un message direct, ou par SMS.

Ainsi, dans un mode préféré de réalisation, le procédé de médiation selon l'invention comporte une étape de réception d'une requête émise par le premier terminal pour obtenir une localisation du deuxième terminal, l'identifiant du deuxième terminal étant compris dans cette requête.

Dans un mode préféré de réalisation, cette requête est reçue par SMS.

Dans un mode particulier de réalisation, les différentes étapes du procédé de médiation selon l'invention sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre des étapes du procédé de médiation tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous en référence aux dessins qui en illustrent un exemple de réalisation dépourvu de tout caractère limitatif. Sur les figures :
- les figures 1 à 9 représentent les principales étapes de procédés de médiation conformes à neuf modes de réalisation; et
- la figure 10 représente de façon schématique un serveur de médiation conforme à un mode particulier de réalisation de l'invention.

### Description détaillée de l'invention

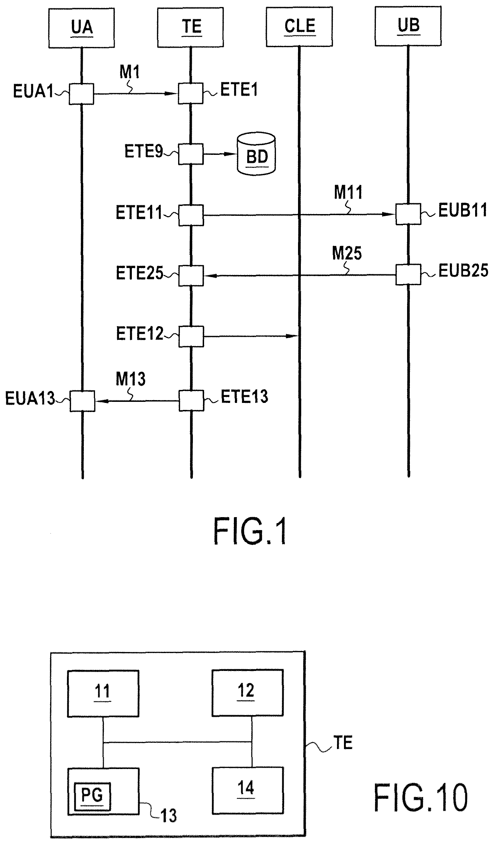

La **figure 1** représente un premier scénario de mise à l'oeuvre de l'invention.

Dans ce mode de réalisation, les deux terminaux UA et UB sont configurés pour mettre en oeuvre l'invention.

Dans ce mode de réalisation, le terminal UB comporte des moyens propres de géolocalisation MPG lui permettant d'obtenir localement sa géolocalisation.

Au cours d'une étape EUA1, le terminal UA envoie une requête M1 au serveur TE, pour invoquer la méthode MOL d'obtention de la localisation du terminal UB. Ce message M1 comporte l'identifiant du terminal UB. Il est reçu par le serveur de médiation TE au cours d'une étape ETE1.

Au cours d'une étape ETE9, le serveur de médiation TE vérifie dans la base de données BD si le terminal UB comporte des moyens propres de géolocalisation MPG.

Si tel est le cas, le serveur de médiation TE envoie, au cours d'une étape ETE11, une requête M11 au terminal UB pour lui demander sa localisation. Cette requête M11 comporte l'identifiant du terminal UA. Elle est reçue par le terminal UB au cours d'une étape EUB11.

Au cours d'une étape EUB25, l'utilisateur du terminal UB peut décider de rejeter la requête M11 et de ne pas y répondre. Si il accepte la requête M11, il commande son terminal UB pour qu'il obtienne sa localisation LOL (localisation obtenue localement au sens de l'invention), en utilisant ses moyens propres de géolocalisation MPG et pour qu'il envoie au serveur de médiation TE une réponse M25 comportant cette localisation obtenue localement LOL.

La réponse M25 peut éventuellement être accompagnée d'informations complémentaires IC, par exemple textuelles. Cette réponse M25 est reçue par le serveur de médiation TE au cours d'une étape ETE25.

Au cours d'une étape ETE12, le serveur de médiation TE interroge le serveur de localisation de confiance CLE et vérifie si la localisation LOL du terminal UB, obtenue localement par le terminal UB, et contenue dans le message M25 est correcte, en la comparant à la localisation réelle LR du terminal UB mémorisée par le serveur de localisation CLE.

Si tel est le cas, le serveur de médiation TE envoie un message M13 au terminal UA au cours d'une étape ETE13, ce message comportant la localisation LOL obtenue localement par le terminal UB accompagnée le cas échéant des d'informations complémentaires IC reçues à l'étape ETE25. Ce message M13 est reçu par le terminal UA au cours d'une étape EUA13.

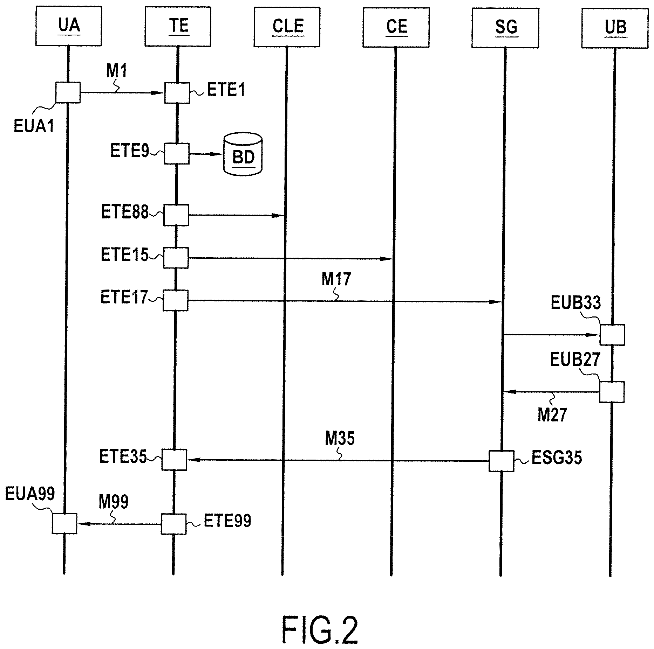

La **figure 2** représente un deuxième scénario ne faisant pas partie de l'invention telle que revendiquée.

Dans ce scénario, le terminal UA est configuré pour mettre en oeuvre l'invention, mais pas le terminal UB. Le terminal UB ne supporte pas non plus le protocole WAP.

Dans ce mode de réalisation, le terminal UB ne comporte pas de moyens de géolocalisation lui permettant d'obtenir localement sa géolocalisation.

Au cours d'une étape EUA1, le terminal UA envoie une requête M1 au serveur TE, pour invoquer la méthode MOL d'obtention de la localisation du terminal UB. Ce message M1 comporte l'identifiant du terminal UB. Il est reçu par le serveur de médiation TE au cours d'une étape ETE1.

Au cours d'une étape ETE9, le serveur de médiation TE vérifie dans la base de données BD si le terminal UB comporte des moyens propres de géolocalisation MPG.

Si tel n'est pas le cas, le serveur de médiation TE interroge le serveur de localisation CLE au cours d'une étape ETE88, pour obtenir la localisation réelle LR du terminal UB.

Au cours d'une étape ETE15, le serveur de médiation TE interroge le serveur de capacités CE pour déterminer si le terminal UB est apte à mettre en oeuvre le protocole WAP.

Si tel n'est pas le cas, le serveur de médiation TE envoie, au cours d'une étape ETE17, une requête M17 à la passerelle SMS SG, pour qu'elle envoie un message court SMS au terminal UB, ce message demandant à l'utilisateur du terminal UB s'il souhaite communiquer sa localisation réelle LR au terminal UA. Dans le mode de réalisation décrit ici, le message SMS comporte la localisation réelle LR du terminal UB, obtenue par le serveur de médiation TE auprès du serveur de localisation CLE.

La passerelle SMS SG envoie le SMS au terminal UB qui le reçoit au cours d'une étape EUB33.

L'utilisateur du terminal UB peut décider de ne pas répondre au SMS, ou d'y répondre de façon positive ou négative.

Nous supposerons dans cet exemple que l'utilisateur y répond positivement en envoyant, au cours d'une étape EUB27, un message M27 à la passerelle SMS SG, ce message M27 comportant un indicateur « OK » représentatif de la volonté de l'utilisateur du terminal UB de communiquer sa localisation au terminal UA. Ce message M27 peut éventuellement comprendre des informations complémentaires IC.

L'utilisateur du terminal UB ayant donné son accord, la passerelle SMS SG envoie, au cours d'une étape ESG35, un message M35 au serveur TE, pour invoquer la méthode MOL d'obtention de la localisation du terminal UB. Ce message M35 comporte l'identifiant du terminal UB et éventuellement les informations complémentaires IC. Il est reçu par le serveur de médiation TE au cours d'une étape ETE35.

Le serveur de médiation TE envoie ensuite un message M99 au terminal TA au cours d'une étape ETE99, ce message comportant la localisation réelle LR du terminal UB accompagnée le cas échéant des informations complémentaires IC reçues à l'étape ETE35. Ce message M99 est reçu par le terminal UA au cours d'une étape EUA99.

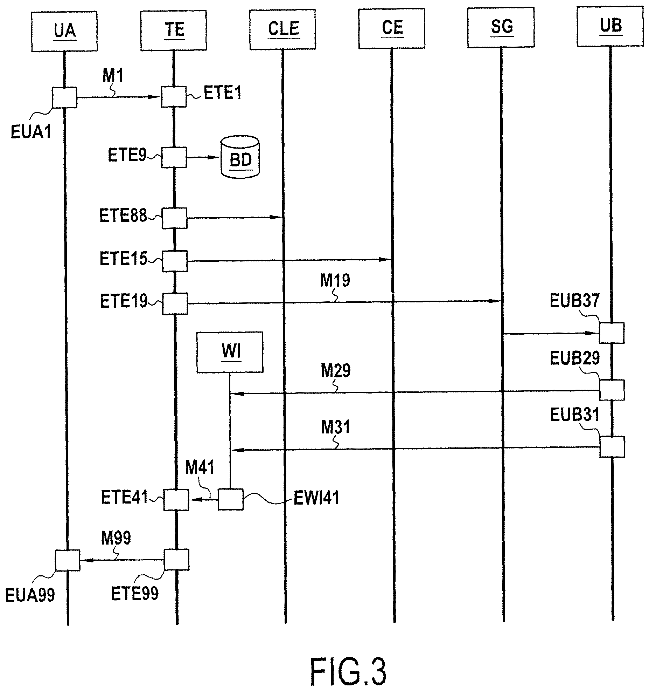

La **figure 3** représente un troisième scénario ne faisant pas partie de l'invention telle que revendiquée.

Dans ce scénario, le terminal UA est configuré pour mettre en oeuvre l'invention, mais pas le terminal UB. Le terminal UB supporte le protocole WAP.

Dans ce mode de réalisation, le terminal UB ne comporte pas de moyens de géolocalisation lui permettant d'obtenir localement sa géolocalisation.

Au cours d'une étape EUA1, le terminal UA envoie une requête M1 au serveur TE, pour invoquer la méthode MOL d'obtention de la localisation du terminal UB. Ce message M1 comporte l'identifiant du terminal UB. Il est reçu par le serveur de médiation TE au cours d'une étape ETE1.

Au cours d'une étape ETE9, le serveur de médiation TE vérifie dans la base de données BD si le terminal UB comporte des moyens propres de géolocalisation MPG.

Si tel n'est pas le cas, le serveur de médiation TE interroge le serveur de localisation CLE au cours d'une étape ETE88, pour obtenir la localisation réelle LR du terminal UB.

Au cours d'une étape ETE15, le serveur de médiation TE interroge le serveur de capacités CE pour déterminer si le terminal UB est apte à mettre en oeuvre le protocole WAP.

Si tel est le cas, le serveur de médiation TE envoie, au cours d'une étape ETE19, une requête M19 à la passerelle SMS SG, pour qu'elle envoie un message SMS enrichi au terminal UB, ce message demandant à l'utilisateur du terminal UB s'il souhaite communiquer sa localisation réelle LR au terminal UA. Dans le mode de réalisation décrit ici, le message SMS enrichi comporte un lien LLR vers un fichier comportant la localisation réelle LR du terminal UB, obtenue par le serveur de médiation TE auprès du serveur de localisation CLE.

La passerelle SMS SG envoie le SMS enrichi au terminal UB qui le reçoit au cours d'une étape EUB37.

L'utilisateur du terminal UB peut décider de ne pas répondre au SMS enrichi, ou d'y répondre de façon positive ou négative.

Nous supposerons dans cet exemple que l'utilisateur clique sur le lien LLR au cours d'une étape EUB29, et accède à une interface WAP IW du serveur TE. Cette interface permet le téléchargement d'une page WAP présentant la localisation réelle LR du terminal UB, un lien donnant la possibilité à l'utilisateur du terminal UB d'accepter ou de refuser que sa localisation réelle soit communiquer au terminal TA et une zone de saisie permettant éventuellement de déposer des informations complémentaires IC destinées à être communiquées au terminal TA.

Nous supposerons dans cet exemple que l'utilisateur du terminal UB souhaite communiquer sa localisation réelle LR au terminal TA et qu'il interagit avec la page WAP pour envoyer un message M31 comportant des informations complémentaires IC à l'interface WAP IW du serveur TE, au cours d'une étape EUB31.

L'utilisateur du terminal UB ayant donné son accord, l'interface WAP IW envoie, au cours d'une étape EWI41, une commande M41 au serveur TE, cette commande M41 comportant l'identifiant du terminal UB et éventuellement les informations complémentaires IC. Elle est reçue par le serveur de médiation TE au cours d'une étape ETE41.

Le serveur de médiation TE envoie ensuite un message M99 au terminal TA au cours d'une étape ETE99, ce message comportant la localisation réelle LR du terminal UB accompagnée le cas échéant des d'informations complémentaires IC reçues par l'interface WAP IW à l'étape ETE41. Ce message M99 est reçu par le terminal UA au cours d'une étape EUA99.

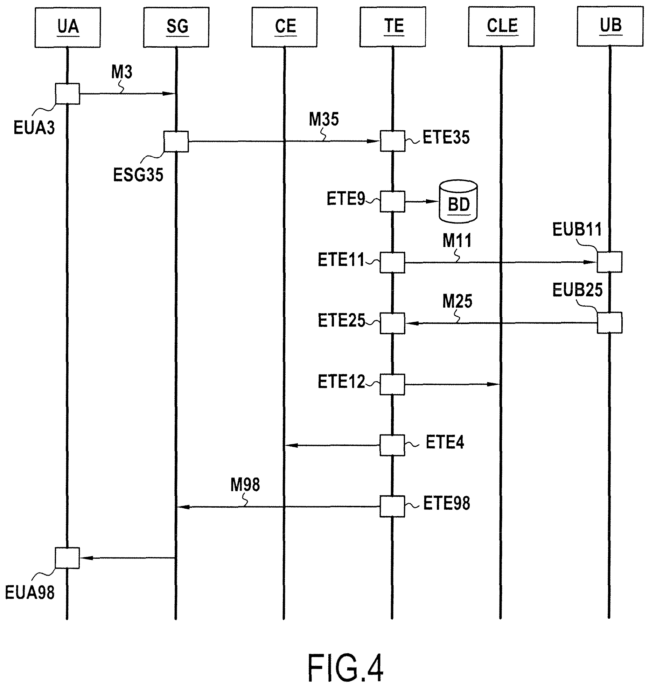

La **figure 4** représente un quatrième scénario de mise à l'oeuvre de l'invention.

Dans ce scénario, ni le terminal UA ni le terminal UB ne sont configurés pour mettre en oeuvre l'invention. Ces terminaux ne sont pas aptes à mettre en oeuvre le protocole WAP.

Dans ce mode de réalisation, le terminal UB comporte des moyens propres de géolocalisation MPG lui permettant d'obtenir localement sa géolocalisation.

Au cours d'une étape EUA3, le terminal UA envoie un message M3 à la passerelle de SMS SG, ce message comportant un mot-clef KW et l'identifiant du terminal UB.

Sur réception de ce message, la passerelle de SMS SG détecte le mot-clef KW et envoie, au cours d'une étape ESG35, un message M35 au serveur TE, pour invoquer la méthode MOL d'obtention de la localisation du terminal UB. Ce message M35 comporte l'identifiant du terminal UB. Il est reçu par le serveur de médiation TE au cours d'une étape ETE35.

Au cours d'une étape ETE9, le serveur de médiation TE vérifie dans la base de données BD si le terminal UB comporte des moyens propres de géolocalisation MPG.

Si tel est le cas, le serveur de médiation TE envoie, au cours d'une étape ETE11, une requête M11 au terminal UB pour lui demander sa localisation. Cette requête M11 comporte l'identifiant du terminal UA. Elle est reçue par le terminal UB au cours d'une étape EUB11.

Au cours d'une étape EUB25, l'utilisateur du terminal UB peut décider de rejeter la requête M11 et de ne pas y répondre. Si il accepte la requête M11, il commande son terminal UB pour qu'il obtienne sa localisation LOL (localisation obtenue localement au sens de l'invention), en utilisant ses moyens propres de géolocalisation MPG et pour qu'il envoie au serveur de médiation TE une réponse M25 comportant cette localisation obtenue localement LOL. Cette réponse est reçue par le serveur de médiation TE au cours d'une étape ETE25.

Au cours d'une étape ETE12, le serveur de médiation TE interroge le serveur de localisation CLE et vérifie si la localisation LOL du terminal UB, obtenue localement par le terminal UB, et contenue dans le message M25 est correcte, en la comparant à la localisation réelle LR du terminal UB mémorisée par le serveur de localisation CLE. Nous supposerons que c'est le cas.

Au cours d'une étape ETE4, le serveur de médiation TE interroge le serveur de capacités CE pour déterminer si le terminal UA est apte à mettre en oeuvre le protocole WAP.

Si tel n'est pas le cas, le serveur de médiation TE envoie, au cours d'une étape ETE98, une requête M98 à la passerelle SMS SG, pour qu'elle envoie un message court SMS au terminal UA, ce message comportant la localisation LOL obtenue localement par le terminal UB, éventuellement accompagnée des informations complémentaires IC.

La passerelle de SMS SG envoie ce message au terminal UA qui le reçoit au cours d'une étape EUA98.

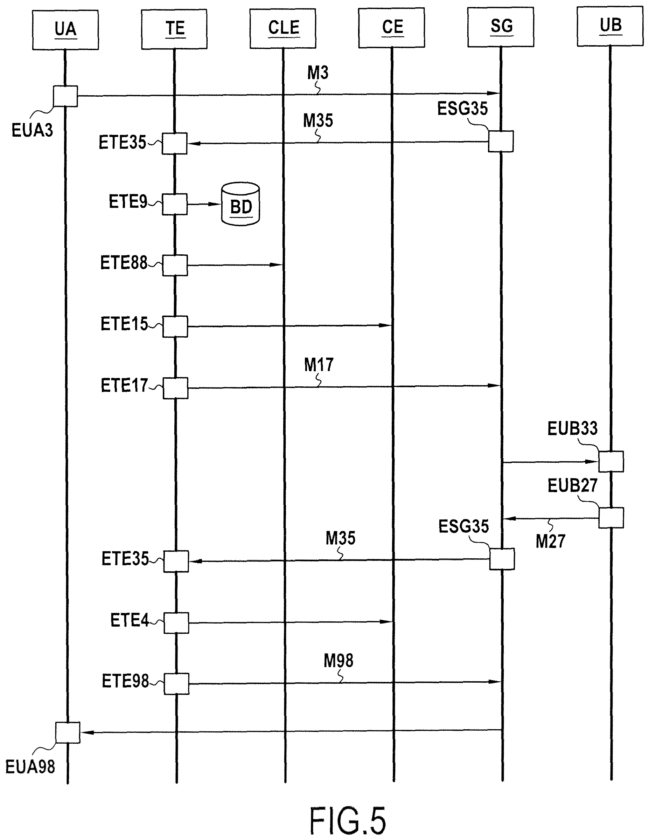

La **figure 5** représente un cinquième scénario ne faisant pas partie de l'invention telle que revendiquée.

Dans ce scénario, le terminal UB est configuré pour mettre en oeuvre l'invention, mais par le terminal UA. Ni le terminal UA, ni le terminal UB n'est apte à mettre en oeuvre le protocole WAP.

Dans ce mode de réalisation, le terminal UB ne comporte pas de moyens propres de géolocalisation lui permettant d'obtenir localement sa géolocalisation.

Au cours d'une étape EUA3, le terminal UA envoie un message M3 à la passerelle de SMS SG, ce message comportant un mot-clef KW et l'identifiant du terminal UB.

Sur réception de ce message, la passerelle de SMS SG détecte le mot-clef KW et envoie, au cours d'une étape ESG35, un message M35 au serveur TE, pour invoquer la méthode MOL d'obtention de la localisation du terminal UB. Ce message M35 comporte l'identifiant du terminal UB. Il est reçu par le serveur de médiation TE au cours d'une étape ETE35.

Au cours d'une étape ETE9, le serveur de médiation TE vérifie dans la base de données BD si le terminal UB comporte des moyens propres de géolocalisation MPG.

Si tel n'est pas le cas, le serveur de médiation TE interroge le serveur de localisation CLE au cours d'une étape ETE88, pour obtenir la localisation réelle LR du terminal UB.

Au cours d'une étape ETE15, le serveur de médiation TE interroge le serveur de capacités CE pour déterminer si le terminal UB est apte à mettre en oeuvre le protocole WAP.

Si tel n'est pas le cas, le serveur de médiation TE envoie, au cours d'une étape ETE17, une requête M17 à la passerelle SMS SG, pour qu'elle envoie un message court SMS au terminal UB, ce message demandant à l'utilisateur du terminal UB s'il souhaite communiquer sa localisation réelle LR au terminal UA. Dans le mode de réalisation décrit ici, le message SMS comporte la localisation réelle LR du terminal UB, obtenue par le serveur de médiation TE auprès du serveur de localisation CLE.

La passerelle SMS SG envoie le SMS au terminal UB qui le reçoit au cours d'une étape EUB33.

L'utilisateur du terminal UB peut décider de ne pas répondre au SMS, ou d'y répondre de façon positive ou négative.

Nous supposerons dans cet exemple que l'utilisateur y répond positivement en envoyant, au cours d'une étape EUB27, un message M27 à la passerelle SMS SG, ce message M27 comportant un indicateur « OK » représentatif de la volonté de l'utilisateur du terminal UB de communiquer sa localisation au terminal UA. Ce message M27 peut éventuellement comprendre des informations complémentaires IC.

L'utilisateur du terminal UB ayant donné son accord, la passerelle SMS SG envoie, au cours d'une étape ESG35, un message M35 au serveur TE, pour invoquer la méthode MOL d'obtention de la localisation du terminal UB. Ce message M35 comporte l'identifiant du terminal UB et éventuellement les informations complémentaires IC. Il est reçu par le serveur de médiation TE au cours d'une étape ETE35.

Au cours d'une étape ETE4, le serveur de médiation TE interroge le serveur de capacités CE pour déterminer si le terminal UA est apte à mettre en oeuvre le protocole WAP.

Si tel n'est pas le cas, le serveur de médiation TE envoie, au cours d'une étape ETE98, une requête M98 à la passerelle SMS SG, pour qu'elle envoie un message court SMS au terminal UA, ce message comportant la localisation LOL du terminal UB, obtenue localement par le terminal UB, éventuellement accompagnée des informations complémentaires IC.

La passerelle de SMS SG envoie ce message au terminal UA qui le reçoit au cours d'une étape EUA98.

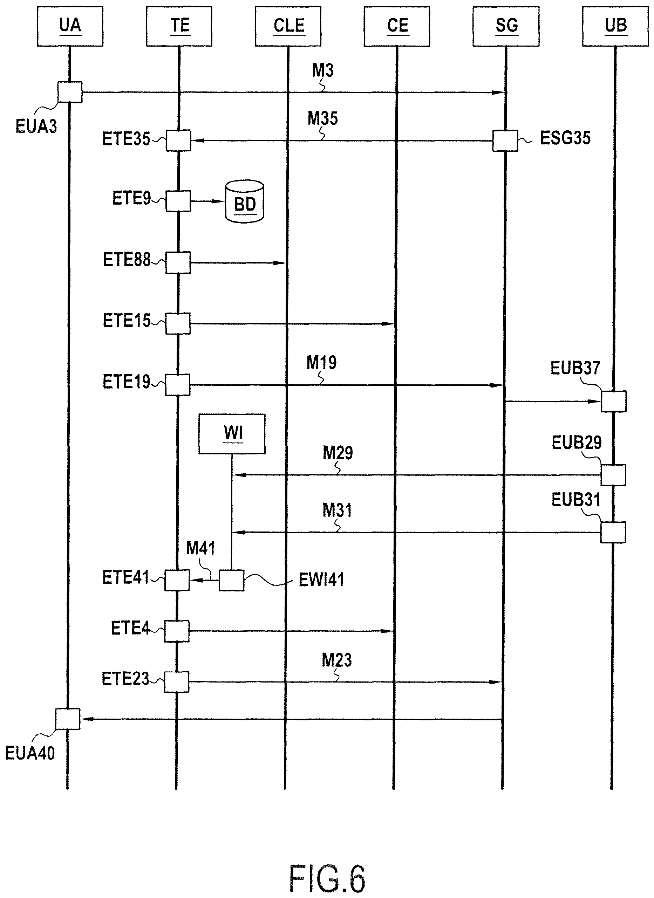

La **figure 6** représente un sixième scénario ne faisant pas partie de l'invention telle que revendiquée.

Dans ce scénario, le terminal UB est configuré pour mettre en oeuvre l'invention, mais par le terminal UA. Le terminal UB est apte à mettre en oeuvre le protocole WAP, mais pas le terminal UA.

Dans ce mode de réalisation, le terminal UB ne comporte pas de moyens de géolocalisation lui permettant d'obtenir localement sa géolocalisation.

Au cours d'une étape EUA3, le terminal UA envoie un message M3 à la passerelle de SMS SG, ce message comportant un mot-clef KW et l'identifiant du terminal UB.

Sur réception de ce message, la passerelle de SMS SG détecte le mot-clef KW et envoie, au cours d'une étape ESG35, un message M35 au serveur TE, pour invoquer la méthode MOL d'obtention de la localisation du terminal UB. Ce message M35 comporte l'identifiant du terminal UB. Il est reçu par le serveur de médiation TE au cours d'une étape ETE35.

Au cours d'une étape ETE9, le serveur de médiation TE vérifie dans la base de données BD si le terminal UB comporte des moyens propres de géolocalisation MPG.

Si tel n'est pas le cas, le serveur de médiation TE interroge le serveur de localisation CLE au cours d'une étape ETE88, pour obtenir la localisation réelle LR du terminal UB.

Au cours d'une étape ETE15, le serveur de médiation TE interroge le serveur de capacités CE pour déterminer si le terminal UB est apte à mettre en oeuvre le protocole WAP.

Si tel est le cas, le serveur de médiation TE envoie, au cours d'une étape ETE19, une requête M19 à la passerelle SMS SG, pour qu'elle envoie un message SMS enrichi au terminal UB, ce message demandant à l'utilisateur du terminal UB s'il souhaite communiquer sa localisation réelle LR au terminal UA. Dans le mode de réalisation décrit ici, le message SMS enrichi comporte un lien LLR vers un fichier comportant la localisation réelle LR du terminal UB, obtenue par le serveur de médiation TE auprès du serveur de localisation CLE.

La passerelle SMS SG envoie le SMS enrichi au terminal UB qui le reçoit au cours d'une étape EUB37.

L'utilisateur du terminal UB peut décider de ne pas répondre au SMS enrichi, ou d'y répondre de façon positive ou négative.

Nous supposerons dans cet exemple que l'utilisateur clique sur le lien LLR au cours d'une étape EUB29, et accède à une interface WAP IW du serveur TE. Cette interface permet le téléchargement d'une page WAP présentant la localisation réelle LR du terminal UB, un lien donnant la possibilité à l'utilisateur du terminal UB d'accepter ou de refuser que sa localisation réelle soit communiquer au terminal TA et une zone de saisie permettant éventuellement de déposer des informations complémentaires IC destinées à être communiquées au terminal TA.

Nous supposerons dans cet exemple que l'utilisateur du terminal UB souhaite communiquer sa localisation réelle LR au terminal TA et qu'il interagit avec la page WAP pour envoyer un message M31 comportant des informations complémentaires IC à l'interface WAP IW du serveur TE, au cours d'une étape EUB31.

L'utilisateur du terminal UB ayant donné son accord, l'interface WAP IW envoie, au cours d'une étape EWI41, une commande M41 au serveur TE, pour invoquer la méthode MOL d'obtention de la localisation du terminal UB. Cette commande M41 comporte l'identifiant du terminal UB et éventuellement les informations complémentaires IC. Elle est reçue par le serveur de médiation TE au cours d'une étape ETE41.

Au cours d'une étape ETE4, le serveur de médiation TE interroge le serveur de capacités CE pour déterminer si le terminal UA est apte à mettre en oeuvre le protocole WAP.

Si tel n'est pas le cas, le serveur de médiation TE envoie, au cours d'une étape ETE23, une requête M23 à la passerelle SMS SG, pour qu'elle envoie un message court SMS au terminal UA, ce message comportant la localisation réelle LR du terminal UB, obtenue par le serveur de médiation TE auprès du serveur de localisation CLE, éventuellement accompagnée des informations complémentaires IC.

La passerelle de SMS SG envoie ce message au terminal UA qui le reçoit au cours d'une étape EUA40.

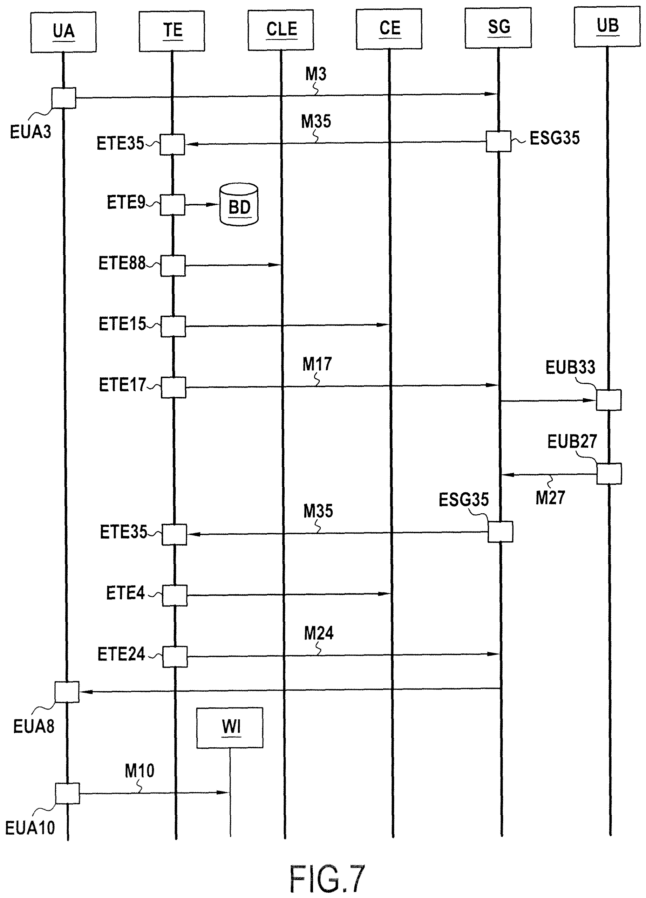

La **figure 7** représente un septième scénario ne faisant pas partie de l'invention telle que revendiquée.

Dans ce scénario, ni le terminal UA ni le terminal UB ne sont configurés pour mettre en oeuvre l'invention. Le terminal UA est apte à mettre en oeuvre le protocole WAP, mais pas le terminal UB.

Dans ce mode de réalisation, le terminal UB ne comporte pas de moyens de géolocalisation lui permettant d'obtenir localement sa géolocalisation.

Au cours d'une étape EUA3, le terminal UA envoie un message M3 à la passerelle de SMS SG, ce message comportant un mot-clef KW et l'identifiant du terminal UB.

Sur réception de ce message, la passerelle de SMS SG détecte le mot-clef KW et envoie, au cours d'une étape ESG35, un message M35 au serveur TE, pour invoquer la méthode MOL d'obtention de la localisation du terminal UB. Ce message M35 comporte l'identifiant du terminal UB. Il est reçu par le serveur de médiation TE au cours d'une étape ETE35.

Au cours d'une étape ETE9, le serveur de médiation TE vérifie dans la base de données BD si le terminal UB comporte des moyens propres de géolocalisation MPG.

Si tel n'est pas le cas, le serveur de médiation TE interroge le serveur de localisation CLE au cours d'une étape ETE88, pour obtenir la localisation réelle LR du terminal UB.

Au cours d'une étape ETE15, le serveur de médiation TE interroge le serveur de capacités CE pour déterminer si le terminal UB est apte à mettre en oeuvre le protocole WAP.

Si tel n'est pas le cas, le serveur de médiation TE envoie, au cours d'une étape ETE17, une requête M17 à la passerelle SMS SG, pour qu'elle envoie un message court SMS au terminal UB, ce message demandant à l'utilisateur du terminal UB s'il souhaite communiquer sa localisation réelle LR au terminal UA. Dans le mode de réalisation décrit ici, le message SMS comporte la localisation réelle LR du terminal UB, obtenue par le serveur de médiation TE auprès du serveur de localisation CLE.

La passerelle SMS SG envoie le SMS au terminal UB qui le reçoit au cours d'une étape EUB33.

L'utilisateur du terminal UB peut décider de ne pas répondre au SMS, ou d'y répondre de façon positive ou négative.

Nous supposerons dans cet exemple que l'utilisateur y répond positivement en envoyant, au cours d'une étape EUB27, un message M27 à la passerelle SMS SG, ce message M27 comportant un indicateur « OK » représentatif de la volonté de l'utilisateur du terminal UB de communiquer sa localisation au terminal UA. Ce message M27 peut éventuellement comprendre des informations complémentaires IC.

L'utilisateur du terminal UB ayant donné son accord, la passerelle SMS SG envoie, au cours d'une étape ESG35, un message M35 au serveur TE, ce message M35 comportant l'identifiant du terminal UB et éventuellement les informations complémentaires IC. Il est reçu par le serveur de médiation TE au cours d'une étape ETE35.

Au cours d'une étape ETE4, le serveur de médiation TE interroge le serveur de capacités CE pour déterminer si le terminal UA est apte à mettre en oeuvre le protocole WAP.

Si tel est le cas, le serveur de médiation TE envoie, au cours d'une étape ETE24, une requête M24 à la passerelle SMS SG, pour qu'elle envoie un message SMS enrichi au terminal UA, ce message comportant un lien LLR2 vers un fichier contenant la localisation réelle LR du terminal UB, obtenue par le serveur de médiation TE auprès du serveur de localisation CLE.

La passerelle SMS SG envoie le SMS enrichi au terminal UA qui le reçoit au cours d'une étape EUA8.

Nous supposerons dans cet exemple que l'utilisateur du terminal UA clique sur le lien LLR2 au cours d'une étape EUA10, et accède à une interface WAP IW du serveur TE. Cette interface permet le téléchargement d'une page WAP présentant la localisation réelle LRR du terminal UB.

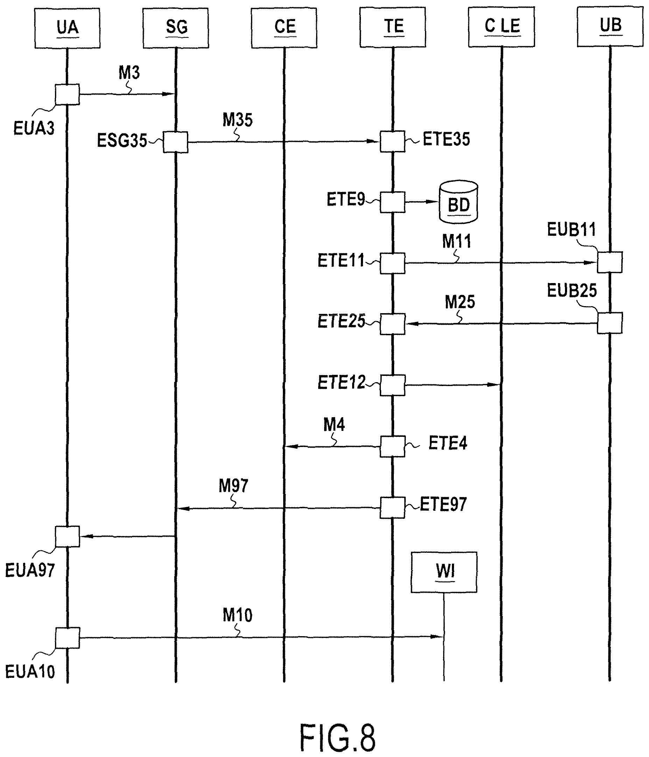

La **figure 8** représente un huitième scénario de mise à l'oeuvre de l'invention.

Dans ce scénario, le terminal UB est configuré pour mettre en oeuvre l'invention, mais pas le terminal UA. Le terminal UA est apte à mettre en oeuvre le protocole WAP, mais pas le terminal UB.

Dans ce mode de réalisation, le terminal UB comporte des moyens propres de géolocalisation MPG lui permettant d'obtenir localement sa géolocalisation.

Au cours d'une étape EUA3, le terminal UA envoie un message M3 à la passerelle de SMS SG, ce message comportant un mot-clef KW et l'identifiant du terminal UB.

Sur réception de ce message, la passerelle de SMS SG détecte le mot-clef KW et envoie, au cours d'une étape ESG35, un message M35 au serveur TE, pour invoquer la méthode MOL d'obtention de la localisation du terminal UB. Ce message M35 comporte l'identifiant du terminal UB. Il est reçu par le serveur de médiation TE au cours d'une étape ETE35.

Au cours d'une étape ETE9, le serveur de médiation TE vérifie dans la base de données BD si le terminal UB comporte des moyens propres de géolocalisation MPG.

Si tel est le cas, le serveur de médiation TE envoie, au cours d'une étape ETE11, une requête M11 au terminal UB pour lui demander sa localisation. Cette requête M11 comporte l'identifiant du terminal UA. Elle est reçue par le terminal UB au cours d'une étape EUB11.

Au cours d'une étape EUB25, l'utilisateur du terminal UB peut décider de rejeter la requête M11 et de ne pas y répondre. S'il accepte la requête M11, il commande son terminal UB pour qu'il obtienne sa localisation LOL (localisation obtenue localement au sens de l'invention), en utilisant ses moyens propres de géolocalisation MPG et pour qu'il envoie au serveur de médiation TE une réponse M25 comportant cette localisation obtenue localement LOL La réponse M25 peut éventuellement être accompagnée d'informations complémentaires IC, par exemple textuelles. Cette réponse M25 est reçue par le serveur de médiation TE au cours d'une étape ETE25.

Au cours d'une étape ETE12, le serveur de médiation TE interroge le serveur de localisation CLE et vérifie si la localisation LOL obtenue localement par le terminal UB et contenue dans le message M25 est correcte, en la comparant à la localisation réelle LR du terminal UB mémorisée par le serveur de localisation CLE. Nous supposerons que c'est le cas.

Au cours d'une étape ETE4, le serveur de médiation TE interroge le serveur de capacités CE pour déterminer si le terminal UA est apte à mettre en oeuvre le protocole WAP.

Si tel est le cas, le serveur de médiation TE envoie, au cours d'une étape ETE97, une requête M97 à la passerelle SMS SG, pour que cette dernière envoie un message SMS enrichi au terminal UA, ce message comportant un lien LLR3 vers un fichier contenant la localisation obtenue LOL du terminal UB.

La passerelle SMS SG envoie le SMS enrichi au terminal UA qui le reçoit au cours d'une étape EUA97.

Nous supposerons dans cet exemple que l'utilisateur du terminal UA clique sur le lien LLR2 au cours d'une étape EUA10, et accède à une interface WAP IW du serveur TE. Cette interface permet le téléchargement d'une page WAP présentant la localisation annoncée LOL du terminal UB.

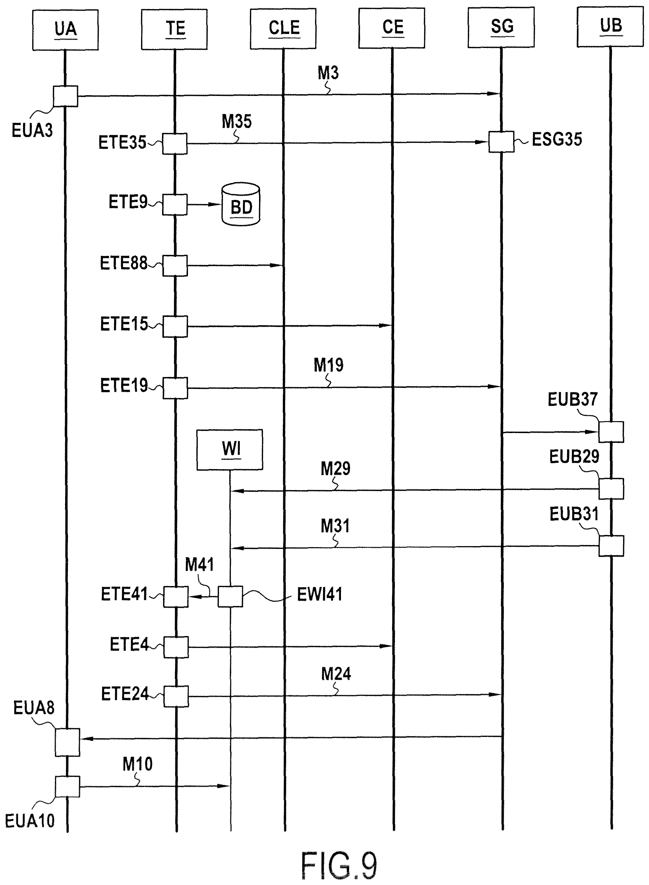

La **figure 9** représente un neuvième scénario ne faisant pas partie de l'invention telle que revendiquée.

Dans ce scénario, ni le terminal UA ni le terminal UB ne sont configurés pour mettre en oeuvre l'invention. Les terminaux UA et UB sont aptes à mettre en oeuvre le protocole WAP.

Dans ce mode de réalisation, le terminal UB ne comporte pas de moyens de géolocalisation lui permettant d'obtenir localement sa géolocalisation.

Au cours d'une étape EUA3, le terminal UA envoie un message M3 à la passerelle de SMS SG, ce message comportant un mot-clef KW et l'identifiant du terminal UB.

Sur réception de ce message, la passerelle de SMS SG détecte le mot-clef KW et envoie, au cours d'une étape ESG35, un message M35 au serveur TE, pour invoquer la méthode MOL d'obtention de la localisation du terminal UB. Ce message M35 comporte l'identifiant du terminal UB. Il est reçu par le serveur de médiation TE au cours d'une étape ETE35.

Au cours d'une étape ETE9, le serveur de médiation TE vérifie dans la base de données BD si le terminal UB comporte des moyens propres de géolocalisation MPG.

Si tel n'est pas le cas, le serveur de médiation TE interroge le serveur de localisation CLE au cours d'une étape ETE88, pour obtenir la localisation réelle LR du terminal UB.

Au cours d'une étape ETE15, le serveur de médiation TE interroge le serveur de capacités CE pour déterminer si le terminal UB est apte à mettre en oeuvre le protocole WAP.

Si tel est le cas, le serveur de médiation TE envoie, au cours d'une étape ETE19, une requête M19 à la passerelle SMS SG, pour que celle-ci envoie un message SMS enrichi au terminal UB, ce message demandant à l'utilisateur du terminal UB s'il souhaite communiquer sa localisation réelle LR au terminal UA. Dans le mode de réalisation décrit ici, le message SMS enrichi comporte un lien LLR vers un fichier comportant la localisation réelle LR du terminal UB, obtenue par le serveur de médiation TE auprès du serveur de localisation CLE.

La passerelle SMS SG envoie le SMS enrichi au terminal UB qui le reçoit au cours d'une étape EUB37.

L'utilisateur du terminal UB peut décider de ne pas répondre au SMS enrichi, ou d'y répondre de façon positive ou négative.

Nous supposerons dans cet exemple que l'utilisateur clique sur le lien LLR au cours d'une étape EUB29, et accède à une interface WAP IW du serveur TE. Cette interface permet le téléchargement d'une page WAP présentant la localisation réelle LR du terminal UB, un lien donnant la possibilité à l'utilisateur du terminal UB d'accepter ou de refuser que sa localisation réelle soit communiquer au terminal UA et une zone de saisie permettant éventuellement de déposer des informations complémentaires IC destinées à être communiquées au terminal UA.

Nous supposerons dans cet exemple que l'utilisateur du terminal UB souhaite communiquer sa localisation réelle LR au terminal UA et qu'il interagit avec la page WAP pour envoyer un message M31 comportant des informations complémentaires IC à l'interface WAP IW du serveur TE, au cours d'une étape EUB31.

L'utilisateur du terminal UB ayant donné son accord, l'interface WAP IW envoie, au cours d'une étape EWI41, une commande M41 au serveur TE, pour invoquer la méthode MOL d'obtention de la localisation du terminal UB. Cette commande M41 comporte l'identifiant du terminal UB et éventuellement les informations complémentaires IC. Elle est reçue par le serveur de médiation TE au cours d'une étape ETE41.

Au cours d'une étape ETE4, le serveur de médiation TE interroge le serveur de capacités CE pour déterminer si le terminal UA est apte à mettre en oeuvre le protocole WAP.

Si tel est le cas, le serveur de médiation TE envoie, au cours d'une étape ETE24, une requête M24 à la passerelle SMS SG, pour qu'elle envoie un message SMS enrichi au terminal UA, ce message comportant un lien LLR2 vers un fichier contenant la localisation réelle LR du terminal UB, obtenue par le serveur de médiation TE auprès du serveur de localisation CLE.

La passerelle SMS SG envoie le SMS enrichi au terminal UA qui le reçoit au cours d'une étape EUA8.

Nous supposerons dans cet exemple que l'utilisateur du terminal UA clique sur le lien LLR2 au cours d'une étape EUA10, et accède à une interface WAP IW du serveur TE. Cette interface permet le téléchargement d'une page WAP présentant la localisation réelle LRR du terminal UB.

La **figure 10** représente de façon schématique un serveur de médiation TE conforme à un mode particulier de réalisation de l'invention.

Dans le mode de réalisation décrit ici, ce serveur TE a l'architecture matérielle d'un ordinateur. Il comporte notamment un processeur 11, une mémoire vive de type RAM 12, une mémoire morte de type ROM 13, et des moyens de communication 14.

La mémoire morte de type ROM 13 constitue un support d'enregistrement conforme à l'invention. Ce support d'enregistrement est lisible par le processeur 11 et il mémorise un programme d'ordinateur PG comprenant des instructions pour mettre en oeuvre un procédé de médiation conforme à l'invention et dont les principales étapes ETExx ont été décrites précédemment en référence notamment aux figures 1, 4 et 8 dans différents modes de réalisation.

Le processeur 11, les mémoires 12, 13, le programme d'ordinateur PG et les moyens de communication 14 constituent notamment :
- des moyens d'obtention d'un identifiant d'un premier terminal UA souhaitant obtenir une localisation d'un deuxième terminal UB ;
- des moyens d'obtention d'une localisation LOL, LR du deuxième terminal UB et de validation de cette localisation ;
- des moyens d'obtention d'une autorisation émise par ledit deuxième terminal UB pour communiquer la localisation LOL, LR du deuxième terminal UB au premier terminal UA ;
- des moyens de communication de cette localisation LOL, LR du deuxième terminal UB au premier terminal UA.

## Revendications

1. Procédé de médiation mis en oeuvre par un serveur (TE) dans un réseau de communication comportant :
- une étape d'obtention d'un identifiant d'un premier terminal (UA) souhaitant obtenir une localisation d'un deuxième terminal (UB) ;
- une étape (ETE9) pour vérifier si ledit deuxième terminal (UB) comporte des moyens propres de géolocalisation (MPG), et si c'est le cas,
- une étape (ETE11, ETE25) d'obtention d'une localisation (LOL) obtenue localement par le deuxième terminal (UB) ;
- une étape (ETE12) de vérification de ladite localisation obtenue localement (LOL) par le deuxième terminal, en la comparant avec une localisation réelle (LR) dudit deuxième terminal (UB) obtenue auprès d'un serveur de localisation de confiance (CLE) ;
- une étape (ETE13, ETE98, ETE97) de communication de ladite localisation (LOL, LR) du deuxième terminal (UB) au premier terminal (UA), ladite communication comportant l'envoi (ETE13, ETE99) d'un message (M13, M99) audit premier terminal (UA), ce message comportant la localisation obtenue localement (LOL) par ledit deuxième terminal (UB) ou la localisation réelle (LR) dudit deuxième terminal (UB).

2. Procédé de médiation selon la revendication 1 **caractérisé en ce qu'**il comporte, lorsque ledit deuxième terminal comporte des moyens propres (MPG) de géolocalisation, une étape (ETE11) d'envoi d'un message (M11) audit deuxième terminal (UB) pour obtenir (ETE25) un message de réponse (M25) comportant ladite localisation (LOL) du deuxième terminal (UB) obtenue localement par ledit deuxième terminal (UB).

3. Procédé de médiation selon la revendication 2, **caractérisé en, ce que** ledit message de réponse comporte des informations complémentaires (IC).

4. Procédé de médiation selon l'une quelconque des revendications 1 à 3, **caractérisé en ce qu'**il comporte une étape (ETE1, ETE35) de réception d'une requête (M1, M35) émise par ledit premier terminal (UA) pour obtenir une localisation (LOL, LR) dudit deuxième terminal (UB), l'identifiant dudit deuxième terminal étant compris dans ladite requête (M1)

5. Procédé de médiation selon la revendication 4, **caractérisé en ce que** ladite requête (M35) est reçue par SMS.

6. Procédé de médiation selon l'une quelconque des revendications 1 à 5 **caractérisé en ce qu'**il comporte une étape (ET17, ET19) d'obtention d'une autorisation émise par ledit deuxième terminal (UB) pour communiquer ladite localisation (LOL, LR) du deuxième terminal (UB) au premier terminal (UA).

7. Procédé de médiation selon la revendication 6 **caractérisé en ce que** ladite étape d'obtention de ladite autorisation comporte une étape (ETE17) d'envoi d'une requête (M17) à une passerelle SMS (SG) pour qu'elle envoie un message SMS au deuxième terminal (UB), ce message demandant à l'utilisateur du deuxième terminal (UB) s'il souhaite communiquer sa localisation réelle (LR) audit premier terminal (UA).

8. Procédé de médiation selon la revendication 6, **caractérisé en ce que** ladite étape d'obtention de ladite autorisation comporte :
- une étape (ETE15) d'interrogation d'un serveur de capacités (CE) pour déterminer si ledit deuxième terminal (UB) est apte à mettre en oeuvre le protocole WAP ; et si c'est le cas
- une étape (ETE19) d'envoi d'une requête (M19) à une passerelle SMS (SG) pour qu'elle envoie un message SMS enrichi audit deuxième terminal (UB), ce message demandant à l'utilisateur du terminal UB s'il souhaite communiquer sa localisation réelle (LR) audit premier terminal (UA), ledit message SMS enrichi comportant un lien (LLR) vers un fichier comportant ladite localisation réelle (LR) du deuxième terminal (UB).

9. Procédé de médiation selon l'une des revendications 1 à 3, **caractérisé en ce que** ladite étape de communication comporte l'envoi (ETE98, ETE23) d'une requête (M98, M23) à une passerelle SMS (SG) pour qu'elle envoie un message SMS au premier terminal (UA), ce message comportant la localisation obtenue localement (LOL) par le deuxième terminal (UB) ou la localisation réelle (LR) dudit deuxième terminal (UB).

10. Procédé de médiation selon l'une des revendications 1 à 3, **caractérisé en ce qu'**il comporte :
- une étape (ETE4) d'interrogation d'un serveur de capacités (CE) pour déterminer si ledit premier terminal (UA) est apte à mettre en oeuvre le protocole WAP ; et **en ce que**
- ladite étape de communication comporte l'envoi (ETE97) d'une requête (M97) à une passerelle SMS (SG), pour qu'elle envoie un message SMS enrichi au premier terminal (UA), ce message comportant un lien (LLR3, LLR2) vers un fichier contenant ladite localisation obtenue localement (LOL) par ledit deuxième terminal (UB) ou ladite localisation réelle (LR) du deuxième terminal (UB).

11. Procédé de médiation selon l'une quelconque des revendications 1 à 10, **caractérisé en ce que** ladite étape de communication de la localisation obtenue localement (LOL) par le deuxième terminal est effectuée uniquement si ladite localisation obtenue localement (LOL) est vérifiée valide par comparaison avec la localisation réelle obtenue auprès du serveur de localisation (CLE) de confiance.

12. Serveur de médiation (TE) dans un réseau de communication comportant :
- des moyens d'obtention d'un identifiant d'un premier terminal (UA) souhaitant obtenir une localisation d'un deuxième terminal (UB) ;
- des moyens de vérification que ledit deuxième terminal (UB) comporte des moyens propres de géolocalisation (MPG) ;
- des moyens d'obtention d'une localisation (LOL) obtenue localement dans le deuxième terminal (UB) ;
- des moyens de vérification de ladite localisation obtenue localement (LOL), en la comparant avec une localisation réelle (LR) dudit deuxième terminal (UB) obtenue auprès d'un serveur de localisation de confiance (CLE) ;
- des moyens de communication de ladite localisation (LOL, LR) du deuxième terminal (UB) au premier terminal (UA), ladite communication comportant l'envoi (ETE13, ETE99) d'un message (M13, M99) audit premier terminal (UA), ce message comportant la localisation obtenue localement (LOL) par ledit deuxième terminal (UB) ou la localisation réelle (LR) dudit deuxième terminal (UB).

13. Support d'enregistrement lisible par un ordinateur sur lequel est enregistré un programme d'ordinateur (PG) comprenant des instructions pour l'exécution des étapes du procédé de médiation selon l'une quelconque des revendications 1 à 11.

14. Programme d'ordinateur (PG) comportant des instructions pour l'exécution des étapes du procédé de médiation selon l'une quelconque des revendications 1 à 11 lorsque ledit programme est exécuté par un ordinateur.

## Patentansprüche

1. Vermittlungsverfahren, das von einem Server (TE) in einem Kommunikationsnetz durchgeführt wird, umfassend:
- einen Schritt des Erhaltens einer Kennung eines ersten Endgeräts (UA), das eine Lokalisierung eines zweiten Endgeräts (UB) erhalten will;
- einen Schritt (ETE9) zum Überprüfen, ob das zweite Endgerät (UB) geeignete Mittel zur Geolokalisierung (MPG) aufweist, und wenn dies der Fall ist,
- einen Schritt (ETE11, ETE25) des Erhaltens einer Lokalisierung (LOL), die lokal von dem zweiten Endgerät (UB) erhalten wird;
- einen Schritt (ETE12) des Überprüfens der Lokalisierung, die lokal von dem zweiten Endgerät erhalten wird (LOL), indem sie mit einer reellen Lokalisierung (LR) des zweiten Endgeräts (UB) verglichen wird, die von einem vertrauenswürdigen Lokalisierungsserver (CLE) erhalten wird;
- einen Schritt (ETE13, ETE98, ETE97) des Kommunizierens der Lokalisierung (LOL, LR) des zweiten Endgeräts (UB) an das erste Endgerät (UA), das Kommunizieren umfassend das Senden (ETE13, ETE99) einer Nachricht (M13, M99) an das erste Endgerät (UA), diese Nachricht umfassend die Lokalisierung, die lokal von dem zweiten Endgerät (UB) erhalten wird (LOL), oder die reelle Lokalisierung (LR) des zweiten Endgeräts (UB).

2. Vermittlungsverfahren nach Anspruch 1, **dadurch gekennzeichnet, dass**, wenn das zweite Endgerät geeignete Mittel (MPG) zur Geolokalisierung aufweist, es einen Schritt (ETE11) des Sendens einer Nachricht (M11) an das zweite Endgerät (UB) enthält, um eine Antwortnachricht (M25) zu erhalten (ETE25), welche die Lokalisierung (LOL) des zweiten Endgeräts (UB) umfasst, die lokal von dem zweiten Endgerät (UB) erhalten wird.

3. Vermittlungsverfahren nach Anspruch 2, **dadurch gekennzeichnet, dass** die Antwortnachricht ergänzende Informationen (IC) umfasst.

4. Vermittlungsverfahren nach einem der Ansprüche 1 bis 3, **dadurch gekennzeichnet, dass** es einen Schritt (ETE1, ETE35) des Empfangens einer Anforderung (M1, M35) umfasst, die von dem ersten Endgerät (UA) ausgesendet wird, um eine Lokalisierung (LOL, LR) des zweiten Endgeräts (UB) zu erhalten, wobei die Kennung des zweiten Endgeräts in der Anforderung (M1) enthalten ist.

5. Vermittlungsverfahren nach Anspruch 4, **dadurch gekennzeichnet, dass** die Anforderung (M35) per SMS empfangen wird.

6. Vermittlungsverfahren nach einem der Ansprüche 1 bis 5, **dadurch gekennzeichnet, dass** es einen Schritt (ET17, ET19) des Erhaltens einer Erlaubnis umfasst, die von dem zweiten Endgerät (UB) ausgesendet wird, um die Lokalisierung (LOL, LR) des zweiten Endgeräts (UB) an das erste Endgerät (UA) zu kommunizieren.

7. Vermittlungsverfahren nach Anspruch 6, **dadurch gekennzeichnet, dass** der Schritt des Erhaltens der Erlaubnis einen Schritt (ETE17) des Sendens einer Anforderung (M17) an einen SMS-Gateway (SG) umfasst, damit er eine SMS-Nachricht an das zweite Endgerät (UB) sendet, wobei diese Nachricht den Benutzer des zweiten Endgeräts (UB) fragt, ob er seine reelle Lokalisierung (LR) an das erste Endgerät (UA) kommunizieren will.

8. Vermittlungsverfahren nach Anspruch 6, **dadurch gekennzeichnet, dass** der Schritt des Erhaltens der Erlaubnis Folgendes umfasst:
- einen Schritt (ETE15) des Abfragens eines Kapazitätenservers (CE), um zu bestimmen, ob das zweite Endgerät (UB) geeignet ist, das WAP-Protokoll umzusetzen; und wenn dies der Fall ist
- einen Schritt (ETE19) des Sendens einer Anforderung (M19) an einen SMS-Gateway (SG), damit er eine angereicherte SMS-Nachricht an das zweite Endgerät (UB) sendet, wobei diese Nachricht den Benutzer des Endgeräts UB fragt, ob er seine reelle Lokalisierung (LR) an das erste Endgerät (UA) kommunizieren will, wobei die angereicherte SMS-Nachricht eine Verknüpfung (LLR) zu einer Datei umfasst, welche die reelle Lokalisierung (LR) des zweiten Endgeräts (UB) umfasst.

9. Vermittlungsverfahren nach einem der Ansprüche 1 bis 3, **dadurch gekennzeichnet, dass** der Schritt des Kommunizierens das Senden (ETE98, ETE23) einer Anforderung (M98, M23) an einen SMS-Gateway (SG) umfasst, damit er eine SMS-Nachricht an das erste Endgerät (UA) sendet, diese Nachricht umfassend die Lokalisierung, die lokal von dem zweiten Endgerät (UB) erhalten wird (LOL), oder die reelle Lokalisierung (LR) des zweiten Endgeräts (UB).

10. Vermittlungsverfahren nach einem der Ansprüche 1 bis 3, **dadurch gekennzeichnet, dass** es Folgendes aufweist:
- einen Schritt (ETE4) des Abfragens eines Kapazitätenservers (CE), um zu bestimmen, ob das erste Endgerät (UA) geeignet ist, das WAP-Protokoll umzusetzen; und dadurch, dass
- der Schritt des Kommunizierens das Senden (ETE97) einer Anforderung (M97) an einen SMS-Gateway (SG) umfasst, damit er eine angereicherte SMS-Nachricht an das erste Endgerät (UA) sendet, diese Nachricht umfassend eine Verknüpfung (LLR3, LLR2) zu einer Datei, welche die Lokalisierung, die lokal von dem zweiten Endgerät (ÜB) erhalten wird (LOL), oder die reelle Lokalisierung (LR) des zweiten Endgeräts (UB) enthält.

11. Vermittlungsverfahren nach einem der Ansprüche 1 bis 10, **dadurch gekennzeichnet, dass** der Schritt des Kommunizierens der Lokalisierung, die lokal von dem zweiten Endgerät erhalten wird (LOL), nur dann durchgeführt wird, wenn die Lokalisierung, die lokal erhalten wird (LOL), durch einen Vergleich mit der reellen Lokalisierung, die vom vertrauenswürdigen Lokalisierungsserver (CLE) erhalten wird, als gültig überprüft ist.

12. Vermittlungsserver (TE) in einem Kommunikationsnetz, umfassend:
- Mittel zum Erhalten einer Kennung eines ersten Endgeräts (UA), das eine Lokalisierung eines zweiten Endgeräts (UB) erhalten will;
- Mittel zum Überprüfen, dass das zweite Endgerät (UB) geeignete Mittel zur Geolokalisierung (MPG) aufweist;
- Mittel zum Erhalten einer Lokalisierung (LOL), die lokal in dem zweiten Endgerät (UB) erhalten wird;
- Mittel zum Überprüfen der Lokalisierung, die lokal erhalten wird (LOL), indem sie mit einer reellen Lokalisierung (LR) des zweiten Endgeräts (UB) verglichen wird, die von einem vertrauenswürdigen Lokalisierungsserver (CLE) erhalten wird;
- Mittel zum Kommunizieren der Lokalisierung (LOL, LR) von dem zweiten Endgerät (UB) an das erste Endgerät (UA), das Kommunizieren umfassend das Senden (ETE13, ETE99) einer Nachricht (M13, M99) an das erste Endgerät (UA), diese Nachricht umfassend die Lokalisierung, die lokal von dem zweiten Endgerät (UB) erhalten wird (LOL), oder die reelle Lokalisierung (LR) des zweiten Endgeräts (UB).

13. Computerlesbares Speichermedium, auf dem ein Computerprogramm (PG) gespeichert ist, das Anweisungen für die Ausführung der Schritte des Vermittlungsverfahrens nach einem der Ansprüche 1 bis 11 umfasst.

14. Computerprogramm (PG), umfassend Anweisungen für die Ausführung der Schritte des Vermittlungsverfahrens nach einem der Ansprüche 1 bis 11, wenn das Programm von einem Computer ausgeführt wird.

## Claims

1. Mediation method implemented by a server (TE) in a communication network comprising:
- a step of obtaining an identifier of a first terminal (UA) wanting to obtain a location of a second terminal (UB) ;
- a step (ETE9) for checking whether said second terminal (UB) includes specific geolocation means (MPG), and if it does,
- a step (ETE11, ETE25) of obtaining a location (LOL) obtained locally by the second terminal (UB);
- a step (ETE12) of checking said location (LOL) obtained locally by the second terminal, by comparing it with a real location (LR) of said second terminal (UB) obtained from a trusted location server (CLE);
- a step (ETE13, ETE98, ETE97) of communicating said location (LOL, LR) of the second terminal (UB) to the first terminal (UA), said communication comprising the sending (ETE13, ETE99) of a message (M13, M99) to said first terminal (UA), this message including the location (LOL) obtained locally by said second terminal (UB) or the real location (LR) of said second terminal (UB) .

2. Mediation method according to Claim 1, **characterized in that** it comprises, when said second terminal includes specific geolocation means (MPG), a step (ETE11) of sending of a message (M11) to said second terminal (UB) to obtain (ETE25) a response message (M25) comprising said location (LOL) of the second terminal (UB) obtained locally by said second terminal (UB).

3. Mediation method according to Claim 2, **characterized in that** said response message comprises additional information (IC).

4. Mediation method according to any one of Claims 1 to 3, **characterized in that** it comprises a step (ETE1, ETE35) of receiving a request (M1, M35) transmitted by said first terminal (UA) to obtain a location (LOL, LR) of said second terminal (UB), the identifier of said second terminal being included in said request (M1).

5. Mediation method according to Claim 4, **characterized in that** said request (M35) is received by SMS.

6. Mediation method according to any one of Claims 1 to 5, **characterized in that** it comprises a step (ET17, ET19) of obtaining an authorization transmitted by said second terminal (UB) to communicate said location (LOL, LR) of the second terminal (UB) to the first terminal (UA) .

7. Mediation method according to Claim 6, **characterized in that** said step of obtaining said authorization comprises a step (ETE17) of sending a request (M17) to an SMS gateway (SG) for it to send an SMS message to the second terminal (UB), this message asking the user of the second terminal (UB) whether he or she wants to communicate his or her real location (LR) to said first terminal (UA).

8. Mediation method according to Claim 6, **characterized in that** said step of obtaining said authorization comprises:
- a step (ETE15) of interrogating a capabilities server (CE) to determine whether said second terminal (UB) is capable of implementing the WAP protocol; and if it is
- a step (ETE19) of sending a request (M19) to an SMS gateway (SG) for it to send an enriched SMS message to said second terminal (UB), this message asking the user of the terminal UB if he or she wants to communicate his or her real location (LR) to said first terminal (UA), said enriched SMS message including a link (LLR) to a file including said real location (LR) of the second terminal (UB).

9. Mediation method according to one of Claims 1 to 3, **characterized in that** said communication step includes the sending (ETE98, ETE23) of a request (M98, M23) to an SMS gateway (SG) for it to send an SMS message to the first terminal (UA), this message comprising the location (LOL) obtained locally by the second terminal (UB) or the real location (LR) of said second terminal (UB).

10. Mediation method according to one of Claims 1 to 3, **characterized in that** it comprises:
- a step (ETE4) of interrogating a capabilities server (CE) to determine whether said first terminal (UA) is capable of implementing the WAP protocol; and **in that**
- said communication step includes sending (ETE97) of a request (M97) to an SMS gateway (SG), for it to send an enriched SMS message to the first terminal (UA), this message including a link (LLR3, LLR2) to a file containing said location (LOL) obtained locally by said second terminal (UB) or said real location (LR) of the second terminal (UB).

11. Mediation method according to any one of Claims 1 to 10, **characterized in that** said step of communicating the location (LOL) obtained locally by the second terminal is performed only if said locally-obtained location (LOL) is verified as valid by comparison with the real location obtained from the trusted location server (CLE).

12. Mediation server (TE) in a communication network comprising:
- means for obtaining an identifier of a first terminal (UA) wanting to obtain a location of a second terminal (UB) ;
- means for verifying that said second terminal (UB) includes specific geolocation means (MPG) ;
- means for obtaining a location (LOL) obtained locally in the second terminal (UB);
- means for checking said locally obtained location (LOL), by comparing it with a real location (LR) of said second terminal (UB) obtained from a trusted location server (CLE);
- means for communicating said location (LOL, LR) of the second terminal (UB) to the first terminal (UA), said communication including the sending (ETE13, ETE99) of a message (M13, M99) to said first terminal (UA), this message including the location (LOL) obtained locally by said second terminal (UB) or the real location (LR) of said second terminal (UB).

13. Computer-readable storage medium on which is stored a computer program (PG) comprising instructions for executing the steps of the mediation method according to any one of Claims 1 to 11.

14. Computer program (PG) comprising instructions for executing the steps of the mediation method according to any one of Claims 1 to 11 when said program is run by a computer.
